# EUROPEAN PATENT APPLICATION

(11) **EP 2 239 867 A1**
(43) Date of publication of application: **13.10.2010**
(21) Application number: 08700758.9
(22) Date of filing: 30.01.2008
(51) Int. Cl.: H04B 7/04

(54) **USER TERMINAL DEVICE AND NETWORK ACCESSING METHOD USED FOR IT**

(71) Applicant: ZTE Corporation, Shenzhen, Guangdong 518057 (CN)
(72) Inventor: CAI, Honghong, Guangdong 518057 (CN); LIU, Pengwu, Guangdong 518057 (CN)
(74) Representative: Ilgart, Jean-Christophe
(86) International application number: PCT/CN2008/000239
(87) International publication number: WO 2009/100568

(57) **Abstract**

A user terminal device includes: an antenna module, comprising a plurality of directional antennas and adapted to access a network through one or more directional antennas of the plurality of antennas; a processor, adapted to set the directions of the directional antennas, and select one directional antenna or a combination of multiple directional antennas of the plurality of antennas to access the network according to the performance parameters of each antenna. A method of network accessing for the user terminal device includes: step 1, the user terminal scanning a downlink channel in the direction of each directional antenna of the user terminal device at a pre-determined time period for acquiring the performance parameters of each directional antenna (S402); step 2, the user terminal constructing a performance parameter table of the directions of each antenna and their combination, and ordering and updating the performance parameters in the performance parameter table (S404); step 3, the mobile terminal selecting one antenna or combination of multiple antennas for accessing the network according to the performance parameter table (S406).

## Description

### Field of the Invention

The present invention relates to wireless communication field, in particular to a user terminal device and a method of network accessing for the terminal device used in the WiMAX (Worldwide Interoperability for Microwave Access) network.

### Background of the Invention

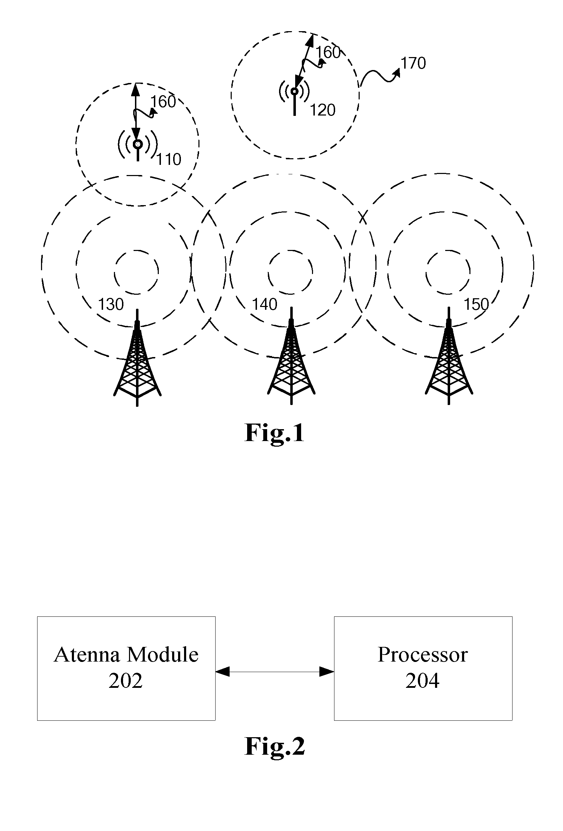

Fig.1 is a schematic diagram of a simple WiMAX system 100, which comprises two WiMAX SSs (Subscriber Station) 110 and 120 with an omni-directional antenna with a coverage radius 160, a directional pattern 170, and 3 BSs (Base Station) 130, 140 and 150.

As shown in the Fig.1, the SS 110 is in the coverage range of the BS 130, that is to say, the SS 110 can access the network via the BS 130. While the SS 120 is not in the coverage range of any BS, theoretically, the SS 120 can not access the network at its' current location, which results in communication abnormity and all service relating to the network can not be carried out normally, comprising the incoming and outgoing of a call, the transmitting and receiving of a short message, the browsing of a website, and the downloading and uploading of data, etc.

### Summery of the Invention

The objective of the present invention is to provide a user terminal device and a method of network accessing for the device, in which the coverage range of the user terminal can be extended by an optional dynamic antenna to access a network as a supplement of the network coverage range.

A user terminal device of the present invention comprises: an antenna module, comprising a plurality of directional antennas, and adapted to access a network through one or more directional antennas of the plurality of antennas; a processor, adapted to set the directions of the directional antennas, and select one directional antenna or a combination of multiple directional antennas of the plurality of antennas to access the network according to the performance parameters of each antenna.

A method of network accessing for the user terminal device of the present invention comprises: step 1, the user terminal scanning a downlink channel in the direction of each directional antenna of the user terminal device at a pre-determined time period for acquiring the performance parameters of each directional antenna; step 2, the user terminal constructing a performance parameter table of the directions of each antenna and their combination, and ordering and updating the performance parameters in the performance parameter table; step 3, the mobile terminal selecting one antenna or a combination of multiple antennas for accessing the network according to the performance parameter table.

Wherein, the performance parameters comprise at least one of a frame error rate, a received signal strength, and a signal to noise ratio, SNR. The pre-determined time period is 100 ms.

Wherein, if the user terminal device does not have non-volatile memory device, the initial values of the performance parameters of the performance parameter table are all being zero. If the user terminal device comprises a non-volatile memory device, the initial values of the performance parameters of the performance parameter table being zero or being the values stored in the non-volatile memory device when the user terminal device is powered off last time.

Wherein, in the case that the performance of the directional antenna or the combination of multiple directional antennas currently used is not the best, the directional antenna or the combination of multiple directional antennas with best performance will be selected, when one or more performance parameters of the directional antenna or the combination of multiple directional antennas are superior to pre-determined thresholds of the corresponding performance parameters of the currently used directional antenna or the combination of multiple directional antennas.

Wherein, the performance parameter table or a part of performance parameters of the performance parameter table is periodically updated according to the operation state of the user terminal device.

Through the user terminal device and the method of network accessing for the user terminal device provided by the present invention, using the dynamic directional antenna device to replace the original omni-directional antenna, and with the control of the processor, an extended transmitting/receiving range can be obtained to enhance the coverage of the network, improve the product performance, and broaden the product application area.

### Brief Description of the Drawings

Drawings are provided for the further understanding of the present invention and form a part of the specification, which are used to explain the present invention with embodiments of the present invention rather than limit the present invention, wherein,
Fig.1 is a schematic diagram showing the user digital terminal system with an omni-directional antenna of the prior art;
Fig.2 is a block diagram showing the user terminal device of the present invention;
Fig.3 is a schematic diagram showing the directional antenna of the device of the present invention;
Fig.4 is a flow chart showing the method of network accessing method for the user terminal device of the present invention;
Fig.5 is a schematic diagram showing the directional pattern of a directional antenna and a combination of multiple directional antennas of the plurality of antennas of the present invention;
Figs. 6A-6B are schematic diagrams showing the selection parameter tables of the directional antenna of the present invention;
Fig. 7 is a flow chart showing the selecting process of the directional antenna of the present invention; and
Fig.8 is a flow chart showing the updating process of the parameters of the present invention.

### Detailed Description of the Embodiments

The embodiments of the present invention will be described in detail with the drawings as follows.

As shown in Fig.2, the user terminal device of the present invention comprises: an antenna module 202, which includes a plurality of directional antennas, and adapts to access a network through one or more directional antennas of the plurality of antennas; a processor 204, which is adapted to set the directions of the directional antennas, and select one directional antenna or a combination of multiple directional antennas of the plurality of antennas to access the network according to the performance parameters of each antenna.

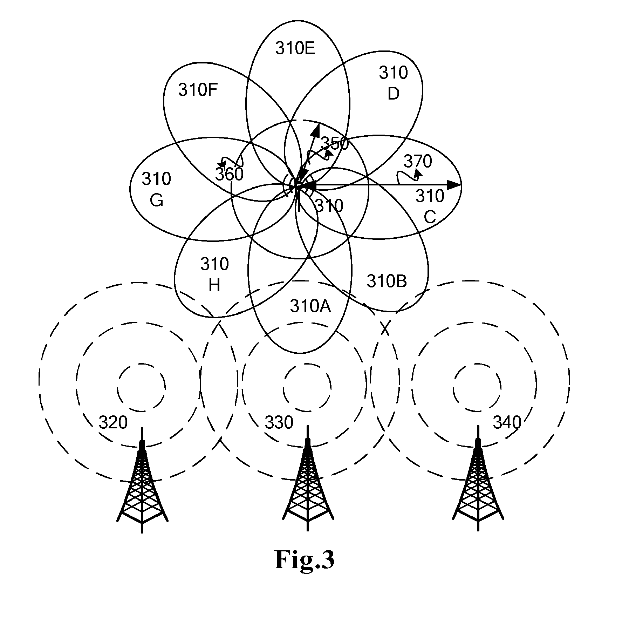

As shown in Fig.3, which includes a digital terminal 310 and base stations 320, 330, 340. As seen in Fig.3, if the digital terminal 310 has an omni-directional antenna (radius: 350; direction: 360), then it can not access any one of the base station 320, 330 and 340. While if the omni-directional antenna is replaced with a series of antennas 310A-310H, its radius can be up to 370, in which 310A is in the coverage of the base station 330 and can access the network through it. Therefore, it can be concluded that the user digital terminal with the directional antenna means may cover a range larger than the user digital terminal with the original omni-directional antenna, so as to extend the transmitting/receiving distance and provide a good supplement for the coverage of the network.

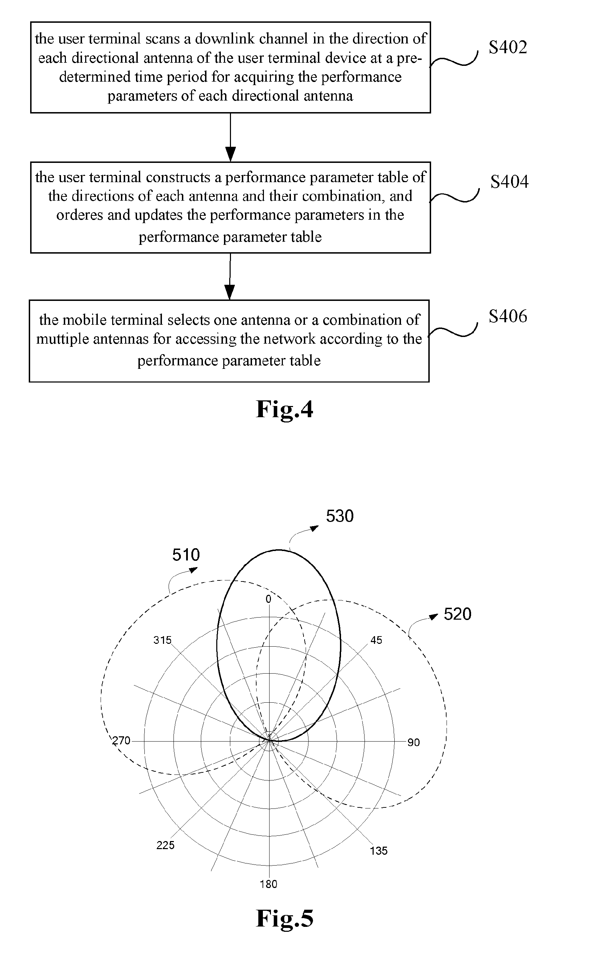

As shown in Fig.4, the method of network accessing for the user terminal device of the present invention comprises: step S402, the user terminal scans a downlink channel in the direction of each directional antenna of the user terminal device at a pre-determined time period for acquiring the performance parameters of each directional antenna; step S404, the user terminal constructs a performance parameter table of the directions of each antenna and their combination, and orders and updates the performance parameters in the performance parameter table; step S406, the mobile terminal selects one antenna or a combination of multiple antennas for accessing the network according to the performance parameter table.

The following is the detailed description.

Step S402, the user terminal scans a downlink channel in the direction of each directional antenna of the user terminal device at a pre-determined time period for acquiring the performance parameters of each directional antenna.

First, the time period will be described. There is a certain requirement for the selection of the time period. If the time period is too long, then during the travelling process of the terminal, it will occur that the terminal has deviated from a base station in one direction while the processor is still communicating with the base station in the direction, which will result in disconnection to the network; if the time period is too short, more processor resources will be occupied, which will result in that the processor works for a long time and the power consumption will increase. In the WiMAX system, the time period is set to 100 ms, while the time period in other system may have a different time length.

Next, the terminal may use not only one directional antenna at a certain time, and possibly use several directional antennas at the same time, such as 2, 3 or even N antennas. As shown in Fig.5, it is assumed that the terminal contains 3 directional antennas A, B and C with 120 degree phase difference. In Fig.5, the directional pattern of the antenna A is denoted by 510, the directional pattern of the antenna B is denoted by 520, and if the antenna A and B unfolding at the same time will result in the directional pattern 530, a better network communication will obtained in the direction than the directions of the antenna A and B.

Step S404, the user terminal constructs a performance parameter table of the directions of each antenna and their combination, and orders and updates the performance parameters in the performance parameter table.

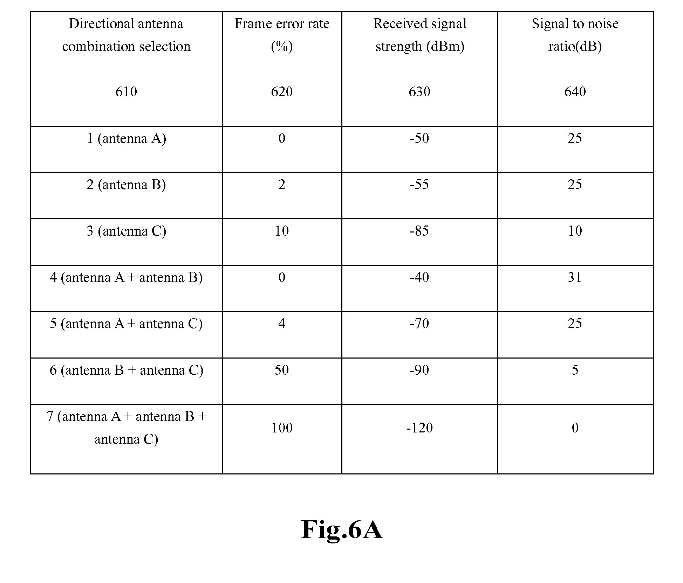

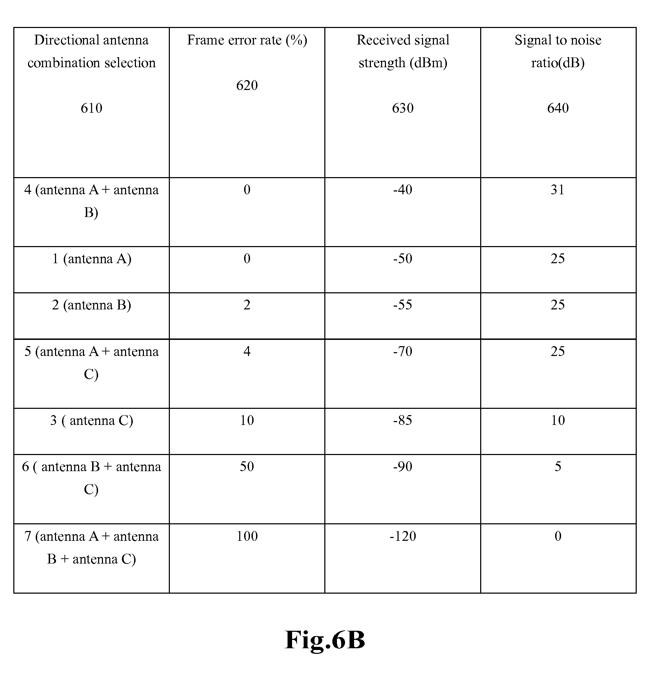

For the performance difference in the configuration of the antennas, it is determined by a parameter table. As shown in Fig.6A, the table comprises three parameters aimed at the configuration of each antenna, a frame error rate 610, a received signal strength indication (RSSI) 620, and carrier to Interference plus Noise Ratio (CINR) 630. The values of the three parameters are calculated by the processor according to the data received from the network. The datum in the table is obtained by measuring the combination of antennas at a certain time, which is an exemplary explanation of the method. The table in Fig. 6A shows the initial measured values, and Fig.6B shows the table of the values having been ordered.

Fig.6A shows the combination of 3 directional antennas A, B, and C, there are 7 kinds of combinations in total apart from the combination of the three directional antennas all being closed. The combination number is determined by the number of the directional antennas, if the number of the directional antennas is comparative large, for example, there are 8 directional antennas, then the theoretical number of combinations is 255, in case that all combinations are listed in the table which will be a very large table and result in a lot of time being consumed for refreshing. Therefore the possibility of directional antennas overlapping will be fully considered when the table is created. The combination of no overlapping at all or a very weak overlapping may be not included in the table.

In the table, considering the characteristic of the terminal antenna system, several parameters instead of one are selected as determination criteria. In general, the receiving performance of the terminal is expressed by the frame error rate 610. However; for a certain combination of two antennas, if the two antennas successfully receives all frame data, which indicates a frame error rate of 0, the RSSI 620 or the SNR 630 will be used to determine the difference of the configurations of the two antennas. As shown in Fig.6, the frame error rates of the combination 1 and combination 4 are 0, the difference in RSSI can be used to determine that the performance of the combination 4 is superior to that of the combination 1.

When the system begins to operate, the parameter table is initialized by the processor. All the initial values can be 0, or be the values when the user terminal device is powered off last time, the selection of the initial values depends on the memory of the system. If the system is configured with non-volatile memory (for example, EEPROM or flash memory), then the values can be stored for use at the next operation when the system is powered off, which will be helpful in reducing the time of the initial search of the network for the system. If the system does not have such a memory, then the values of the parameters table are initialized as 0.

Step S406, the mobile terminal selects one antenna or a combination of multiple antennas for accessing the network according to the performance parameter table.

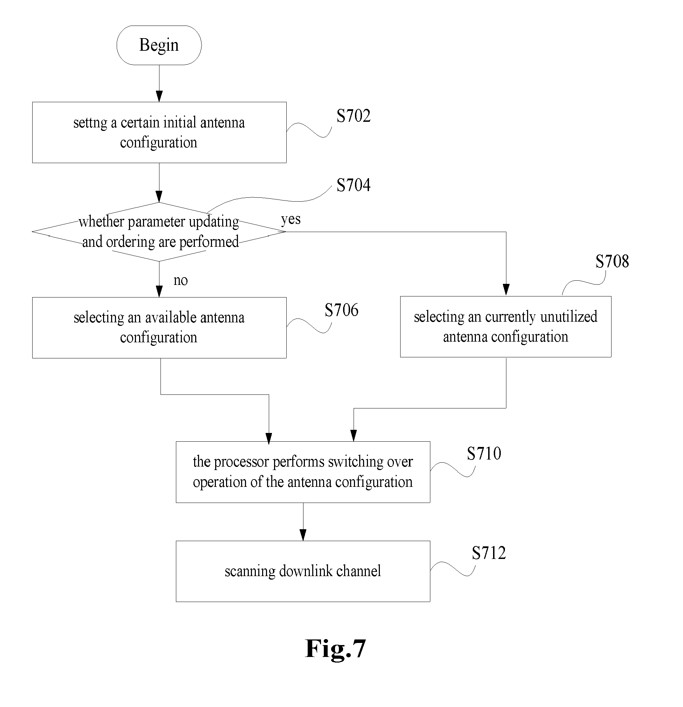

The process of selecting antenna configuration according to the method of the present invention, as shown in Fig.7, comprises the following steps:
Step S702, an initial antenna configuration is selected for synchronization with the base station according to the parameter table; if the parameter table contains the antenna configuration used last time, it is started from the antenna configuration, if there is no such information, the scan starts from the initial antenna direction (such as a single directional antenna in 0 degree direction) defined by the system.
Step S704, it is determined whether to update and order the parameter table, in general, the parameter table is periodically updated and ordered, however, update may be performed in different ways according to the current operation state of the terminal.
Step S706 to Step S708, when the system is initialized, if the parameters of the last operation have not been stored in the current parameter table, in order to rapidly access the network, parameter update is not performed. When it is scanned that a certain antenna configuration may operate properly, such an antenna configuration is selected for operation, and then the parameter table will be updated and ordered in the next scan period.

After a success initialization, the parameter table is updated and ordered as the antenna combination table shown in Fig.6B, the selection of the antenna configuration depends on the order of the parameter table, but is not entirely in accordance with the order, and the interference should be considered; in the case that the terminal is ensured to work properly, frequent switching over antenna configuration should be avoided to a certain extent.

To this end, two pointer vectors, i.e., the best performance pointer and the current use pointer, can be set, in which the former points to the foremost antenna configuration in the order, the latter points to the antenna configuration currently being used. The two pointers may point to the same antenna configuration or different antenna configurations. When the two pointers point to the same configuration, it indicates that the antenna configuration currently used is the foremost antenna configuration in the order. When the two pointers point to different antenna configurations, it indicates the foremost antenna configuration is not the one currently used, and there is another antenna configuration whose performance is superior to the antenna configuration currently used. It is to be noted that, in this case, the current use pointer will not be immediately set to point to the foremost antenna configuration in the order, but a threshold (for example, the difference of the frame error rate is less than 3%) is set, and when a certain parameter performance of the foremost antenna configuration is higher than that of the currently used antenna configuration by this threshold, the current use pointer will be set to point to the foremost antenna configuration in the order. In this case, switching over antenna configuration will be reduced as much as possible while the normal work is ensured, and interference is avoided.

In such a way, updating and ordering the antenna parameters are related to the selection of the antenna configuration, after the terminal performs parameter updating and ordering each time, the current use antenna configuration pointer and the best performance antenna configuration pointer are reset. When the terminal works, the antenna configuration is selected according to the two pointers.

Step S710 to S712, whether the parameters have been updated and ordered, once a certain antenna configuration is selected, it will be controlled to switch on/off by a processor, and the downlink channel scanning operation will be performed.

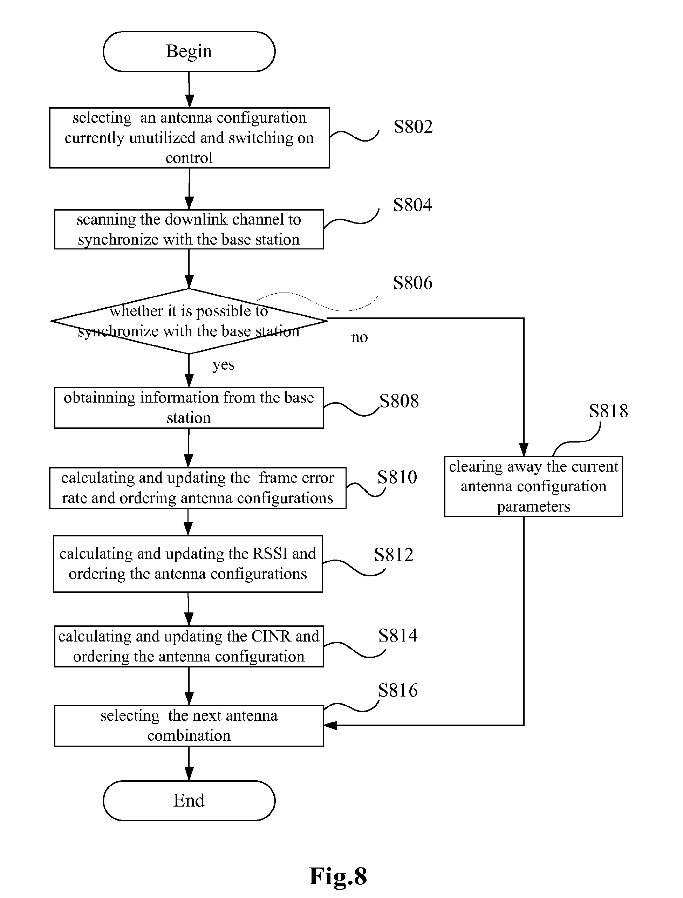

Although the updating and ordering of the parameter table are performed periodically, the operation for updating and ordering may be different according to the terminal operation state. As a general principle, the parameter table shall be updated in time without affecting the current operation state of the terminal. The flow of parameters updating is shown in Fig.8.

Step S802, an antenna configuration currently unused is selected.

Step S804, the downlink channel is scanned to attempt to synchronize with the base station.

Step S806, it is determined whether it is possible to synchronize with the base station, if possible, step S808 to S816 will be performed to obtain information from the base station, and calculate the frame error rate, the RSSI and the CINR respectively, and perform updating and ordering; after these operations are performed, the process turns to step S818, the next unused antenna configuration is selected and the process is repeated from step S804.

If the current antenna configuration can not synchronize with the base station, then step S810 will be performed; after the current parameters are cleared away, the process turns to S818, and restarts by selecting the next antenna configuration. After each unutilized antenna configuration is scanned, a table with ordering is obtained, as shown in Fig.6B, and the table is used as the basis for selecting an antenna configuration by the terminal.

It is to be noted that, although each update process is the same, the number of updated antenna configuration may be different based on the terminal state. This basis is whether the terminal is in operation process during the current scanning, if it is in operation process of transmitting or receiving data, at this point, in order to ensure that the update process dose not influence the current operation state, the update may be performed by selecting only the antenna configuration being able to access the network. If the number of antenna configurations being able to access the network is comparative large, the update may also be performed by selecting several antenna configurations in the front part of the order. Fig.6B shows the table in which only the first 4 antenna combination parameters are updated.

If the current terminal is in an idle mode and does not work, then all of antenna combination parameters can be updated, and the operation as shown in Fig.8 is performed for all the antenna combinations to form a complete parameter update and order table. Fig.6B shows the table with all antenna combination parameters being updated.

The method and technology of the present invention can be widely used. Apart from being applied to the WiMAX, the method and technology of the present invention also can be applied to other networks providing wireless access functionality, such as GSM, CDMA, PHS, WCDMA, TD-SCDMA, etc. The wireless digital terminals can be a series of wireless digital accessing device, such as a cell phone, CPE (Customer Premise Equipment), PCMCIA, etc.

Above description is to illustrate the preferred embodiments not limit the present invention. Various alterations and changes to the present invention are apparent to those skilled in the art. The scope defined in claims shall comprise any modification, equivalent substitution and improvement in the spirit and principle of the present invention.

## Claims

1. A user terminal device, **characterized by**, comprising,
an antenna module, comprising a plurality of directional antennas and adapted to access a network through one or more directional antennas of the plurality of antennas;
a processor, adapted to set the directions of the directional antennas, and select one directional antenna or a combination of multiple directional antennas of the plurality of antennas to access the network according to the performance parameters of each antenna.

2. The user terminal device according to Claim 1, **characterized in that** the performance parameters comprise at least one of a frame error rate, a received signal strength, and a signal to noise ratio, SNR.

3. A method of network accessing for the user terminal device according to Claim 1 or 2, **characterized in that** the method comprising:
step 1, the user terminal scanning a downlink channel in the direction of each directional antenna of the user terminal device at a pre-determined time period for acquiring the performance parameters of each directional antenna;
step 2, the user terminal constructing a performance parameter table of the directions of each antenna and their combination, and ordering and updating the performance parameters in the performance parameter table;
step 3, the mobile terminal selecting one antenna or a combination of multiple antennas for accessing the network according to the performance parameter table.

4. The method of network accessing for the user terminal device according to Claim 3, **characterized in that** the performance parameters comprise at least one of a frame error rate, a received signal strength, and a signal to noise ratio, SNR.

5. The method of network accessing for the user terminal device according to Claim 4, **characterized in that** if the user terminal device does not have non-volatile memory device, the initial values of the performance parameters of the performance parameter table all being 0.

6. The method of network accessing for the user terminal device according to Claim 4, **characterized in that** if the user terminal device comprises a non-volatile memory device, the initial values of the performance parameters of the performance parameter table being 0 or being the values stored in the non-volatile memory device when the user terminal device is powered off last time.

7. The method of network accessing for the user terminal device according to Claim 5 or 6, **characterized in that** in the case that the performance of the directional antenna or the combination of multiple directional antennas currently used is not the best, the directional antenna or the combination of multiple directional antennas with the best performance will be selected, when one or more performance parameters of the directional antenna or the combination of multiple directional antennas are superior to pre-determined thresholds of the corresponding performance parameters of the currently used directional antenna or the combination of multiple directional antennas.

8. The method of network accessing for the user terminal device according to Claim 7, **characterized in that** the performance parameter table is periodically updated according to the operation state of the user terminal device.

9. The method of network accessing for the user terminal device according to Claim 8, **characterized in that** a part of performance parameters of the performance parameter table is periodically updated according to the operation state of the user terminal device.

10. The method of network accessing for the user terminal device according to Claim 9, **characterized in that** the pre-determined time period is 100ms.
